# EUROPÄISCHE PATENTANMELDUNG

(11) **EP 1 843 147 A1**
(43) Veröffentlichungstag der Anmeldung: **10.10.2007**
(21) Anmeldenummer: 06007460.6
(22) Anmeldetag: 08.04.2006
(51) Int. Cl.: G01N 21/86, G06T 7/00

(54) **Ortsaufgelöste Analyse optischer Daten eines Testelementes**

(71) Anmelder: Roche Diagnostics GmbH, 68305 Mannheim (DE); F.HOFFMANN-LA ROCHE AG, 4070 Basel (CH)
(72) Erfinder: Dr. Hans-Peter, Haar, 69168 Ellerstadt (DE); Dr. Rudolf, Pachl, 67158 Ellerstadt (DE); Volker, Zimmer, 67229 Laumersheim (DE); Dr. Peter, Seelig, 60318 Frankfurt (DE); Dr. Bermd, Stenkamp, 69120 Heidelberg (DE); Jean-Michel, Asfour, 69469 Weinheim (DE)

(57) **Zusammenfassung**

Ein System zur optischen Bestimmung der Konzentration eines Analyten in einer Körperflüssigkeit. Das System beinhaltet ein analytisches Testelement, das eine Tragschicht und darauf angeordnet einen Nachweisbereich aufweist, der die zum Nachweis des Analyten in einer Körperflüssigkeit erforderlichen Reagenzien enthält, sowie ein Instrument, das eine Beleuchtungseinheit mit mindestens einer Lichtquelle, eine Detektionseinheit und eine Auswerteeinheit aufweist. Mit der Beleuchtungseinheit und der Detektionseinheit wird der Nachweisbereich optisch abgerastert.

## Beschreibung

### Technisches Gebiet der Erfindung:

Die Erfindung betrifft die Konzentrationsbestimmung eines Analyten in Flüssigkeit.

### Stand der Technik:

Die Konzentrationsbestimmung verschiedener Analyten in physiologischen Proben ist von wachsender Bedeutung in unserer Gesellschaft. Die Untersuchung solcher Proben findet in verschiedenen Anwendungsbereichen statt, z. B. in klinischen Labors oder im "Home-Monitoring". Hierbei sind die Ergebnisse von großer Bedeutung, bei der Handhabung verschiedener Krankheiten. Hierzu zählt vor allem auch die Glukosemessung beim Diabetes Management sowie die Cholesterinmessung bei Herz-und Gefäßkrankheiten. Die medizinische Blutdiagnostik setzt stets die Gewinnung einer Blutprobe des zu untersuchenden Individuums voraus.

Die nach dem Stechvorgang durchgeführte Analytik wird häufig in einem kleinen, tragbaren Messgerät, einem so genannten "Handheld device" durchgeführt, in dem mit Blut benetzte Testelemente analysiert werden. Eine große Bedeutung haben diese Handheld devices vor allem in der Diagnostik von Diabetes Erkrankungen. Die Messung in diesen Geräten wird vor allem elektrochemisch oder optisch durchgeführt. Bei den optisch basierten Messungen, wird die Probe mit Licht beleuchtet und das reflektierte Licht detektiert, um die Analytkonzentration zu bestimmen. Hierzu werden vor allem Testelemente wie Teststreifen verwendet, die mit der Probe, wie Blut oder interstitielle Flüssigkeit benetzt werden. Die Probe reagiert anschließend mit den Reagenzien, die auf diesem Testelement aufgebracht sind. Dies kann zu einer Farbveränderung führen oder aber auch bei einer elektrochemischen Reaktion zu Ladungsänderungen, die dann detektiert werden können.

Bei der Benutzung dieser Testelemente ist es von großer Bedeutung, dass der Nachweisbereich des Testelementes gleichmäßig von der Testflüssigkeit benetzt ist. Die ungleichförmige oder unzureichende Benetzung des Nachweisbereiches kann zu fehlerhaften Ergebnissen führen. Besonders wenn eine geringe Menge von Testflüssigkeit benutzt wird, könnte die Verteilung auf dem Testelement nicht gleichförmig sein und nur ein Teil des Nachweisbereiches ist mit Probenmaterial benetzt. In den herkömmlichen optisch basierten Messmethoden wird häufig das reflektierte Licht von kleinen Ausschnitten dieses Nachweisbereich vermessen. Bei unzureichender Benetzung des Nachweisbereiches kann so die notwendige Größe des zu vermessenden Ausschnitts für eine fehlerfreie Messung unterschritten werden. Dies führt häufig zu einer fehlerhaften Messung und bedeutet für den Patienten entweder eine Wiederholungsmessung oder falsche Messwerte.

Ein Ansatz diese Problematik zu lösen, wird in den Patenten US 5,889,585, US 6,055,060 sowie WO 97/36168 beschrieben. Hierbei wird eine ortsaufgelöste Messung durchgeführt, bei der zwei verschiedene Punkte auf dem Testelement beleuchtet und die beiden Messergebnisse ins Verhältnis gesetzt werden, um eine mögliche uneinheitliche Benetzung zu detektieren. Falls eine ungleichmäßige Benetzung detektiert wird, wird der Benutzer aufgefordert mehr Probe auf dem Testelement zu applizieren.

Nachteil dieser Methode ist, dass kleine Probevolumina nicht vermessen werden können, da kein hinreichend großes Probevolumen für eine vollständige Benetzung zur Verfügung steht.

Zur Auswertung von kleinen Probevolumen, die nicht vollständig das Testfeld benetzen, beschreibt die Erfindung EP 1 359 409 A2 ein Verfahren zur Unterscheidung von benetzten und unbenetzten Bereichen auf dem Testelement. Hierzu werden ein bis zwei Lichtquellen benutzt, die das Testelement beleuchten, die mittels eines Detektorarrays detektiert werden. Die wenig bis gar nicht benetzten Bereiche werden zur Auswertung nicht mit herangezogen.

Nachteil dieser Erfindung ist, dass keine weitere Differenzierung der benetzten Bereiche durchgeführt wird. Bei einer Teilbenetzung des Testelementes verteilt sich jedoch die Probe ungleichmäßig auf dem Testelement. Der Randbereich weist hierbei eine unterschiedliche, durchschnittliche Analytkonzentration auf als der Kern des Probentropfens. Dies ist auf unterschiedliche Ausbreitungsmöglichkeiten und damit auch unterschiedliche Diffusionsvorgänge der Flüssigkeit im Kern und im Randbereich zurückzuführen. In der Anmeldung EP 1 359 409 A2 erfolgt jedoch keine Differenzierung zwischen Randbereich und benetzten Bereichen, sodass die Randbereiche auf die gleiche Weise ausgewertet werden wie der Kern des Probetropfens. Außerdem findet keine Qualitätskontrolle des Testelementes statt, weder in den benetzten noch in den unbenetzten Teilbereichen. Durch die undifferenzierte Auswertung und die mangelnde Qualitätskontrolle kann bei kleinen Probevolumen ein großer Fehler des Messergebnisses entstehen.

Da die Tendenz zu immer höher automatisierten und integrierten Systemen zur schmerzärmeren Blutgewinnung und Detektion geht, was nur durch niedrigere Einstichtiefen zu erreichen ist und damit zu weniger Blutmengen führt, ist eine verlässliche Vermessung von minimalen Blutvolumina unerlässlich.

Die Messgeräte, die im Stand der Technik beschrieben werden beinhalten alle das Problem, keine differenzierte Auswertung der Messsignale durchzuführen, die von unterschiedlichen Bereichen des benetzten Testelementes abgestrahlt werden. Bei sehr kleinen Probevolumen, bei denen der Randbereich einen großen Anteil am Probetropfen auf dem Testelement einnimmt, kann jedoch auf eine Differenzierung der benetzten Teilbereiche nicht verzichtet werden, um eine ausreichend genaue Bestimmung des Analyten vorzunehmen. Darüber hinaus zeigt sich, dass es bei kleinen Probevolumen notwendig ist eine ausreichend homogene Probenverteilung zu gewährleisten. Ein inhomogenes Testelement würde dies verhindern und die Fehler im Testelement könnten ebenfalls zu Fehlmessungen führen.

Im Stand der Technik wird eine derartige Qualitätskontrolle der Testelemente vor bzw. nach der Applikation der Blutprobe nicht beschrieben. Hierdurch werden auch Messungen akzeptiert, die aus fehlerbehafteten Signalen berechnet werden. Eine weitere Fehlerquelle für falsche Messergebnisse ist die unterschiedliche Ausbreitung der Blutprobe auf dem Nachweisbereich des Testelementes. Die Ausbreitung, auch als Spreiten bezeichnet, ist von der Viskosität des Blutes abhängig. Nicht nur die Zusammensetzung des Blutes beeinflusst das Spreiten, sondern auch die Oberfläche auf der sich das Blut ausbreitet. Auf den Testelementen bildet der Probetropfen wie oben beschrieben einen Randbereich, der eine gegenüber dem Kern des Tropfens unterschiedliche durchschnittliche Analytkonzentration aufweist. Durch Erkennung bzw. Korrektur dieser Unterschiede kann beispielsweise das Risiko für einen Diabetes-Patienten reduziert werden, falsche Glukosewerte als Grundlage für eine anschließende Insulin-Therapie zu verwenden.

Aus diesen Gründen gibt es großes Interesse, neue Geräte zu entwickeln und Methoden zu etablieren, die auch mit sehr kleinen Flüssigkeitsmengen ein zufrieden stellendes Testergebnis liefern. Hierzu wird ein System benötigt, das auch Auswertungen der Tropfen in Randbereichen gewährleistet. Hierdurch würden zusätzliche Messungen aufgrund zu geringer Probevolumina, die ein weiteres Stechen und damit zusätzliche Schmerzen und Kosten bedingen, nahezu ausgeschlossen. Für den Patienten hat dies den Vorteil, dass aufgrund der minimalen Probenvolumina die zur Messung benötigt werden, eine schmerzärmere Generierung der benötigten Blutmenge möglich ist. Weniger Stichschmerz würde die Bereitschaft vergrößern, angemessen häufig den Blutglukosewert zu vermessen und damit eine bessere Kontrolle über den Verlauf des Blutglukosespiegels zu haben.

Aufgabe der vorliegenden Erfindung ist es deshalb, ein Analysesystem zu entwickeln, das kleinste Probevolumina differenziert und exakt vermessen kann, ohne dass der Patient Gefahr läuft, fehlerhafte Messungen als Grundlage seiner weiteren Therapie zu legen.

Eine weitere Aufgabe der Erfindung ist es, eine Qualitätskontrolle der Messung zu generieren.

Erfindungsgemäß wird ein System zur Detektion eines Analyten in Körperflüssigkeiten beschrieben. In dem System kann ein analytisches Testelement benutzt werden, das eine Tragschicht und darauf angeordnet, einen Nachweisbereich aufweist. Wenn nötig, beinhaltet der Nachweisbereich Reagenzien, die mit dem Analyten reagieren. Das System beinhaltet außerdem ein Instrument, das eine Beleuchtungseinheit, eine Detektionseinheit und eine Auswerteeinheit aufweist, wobei die Auswerteeinheit in die Detektionseinheit integriert sein kann. Die Beleuchtungseinheit kann aus einer Laserdiode, einem Laser, einem Laser-Array oder einem Laserdioden-Array oder einer anderen gut fokussierbaren Lichtquelle bestehen. Das von der Beleuchtungseinheit auf den Nachweisbereich fokussierte Licht wird vom Testelement zum Teil absorbiert und zum Teil reflektiert bzw. transmittiert. Unabhängig, ob das reflektierte oder transmittierte Licht gemessen wird, wird das abgestrahlte Licht vom Nachweisbereich mittels einer Detektionseinheit aufgefangen und das detektierte Signal wird an die Auswerteeinheit weitergeleitet.

Die Auswerteeinheit ist dabei so programmiert, dass sie die Intensitäten der beleuchteten bzw. detektierten Teilbereiche mit mindestens einem Schwellenwert vergleicht. Wenn die Intensität einen bestimmten Wert, in diesem Fall den ersten Schwellenwert, über- bzw. unterschreitet so ist der Teil des Nachweisbereiches benetzt. Wird von der Intensität eines Teilbereiches zusätzlich ein zweiter Schwellenwert über- bzw. unterschritten, so wird dieser Teilbereich dem Kernbereich des Probetropfens zugeordnet. Alle Teilbereiche, die nur den ersten aber nicht den zweiten Schwellenwert über- bzw. unterschreiten, werden dem Randbereich zugeordnet.

Das trocken gelagerte Testelement wird bei Benutzung durch die Testflüssigkeit (z. B. Blut, interstitielle Flüssigkeit, Urin oder andere Körperflüssigkeiten) benetzt und dabei kann eine Reaktion mit den Reagenzien auf dem Testelement ausgelöst werden, wenn Reagenzien vorhanden sind. Unter Verwendung spezieller Anregungs- bzw. Detektionssysteme sind keine Reagenzien in diesem Bereich nötig. Eine reagenzfreie Messung kann beispielsweise auf der Bestimmung des optischen Brechungsindex, oder auf einer IR-spektroskopischen Messung beruhen. Dann wird die Konzentration des Analyten ohne eine reaktive Umsetzung direkt bestimmt.

Bei großen Probevolumen ist der Randbereich im Vergleich zum Kernbereich sehr klein und eine gesonderte Auswertung kann vernachlässigt werden. Hier findet die Auswertung mit Hilfe eines Algorithmus statt, der die Intensitäten der Teilbereiche einem Konzentrationswert des Analyten zuordnet. Diese Korrelation der Intensitäten zur Konzentration kann in einer Tabelle hinterlegt sein.

Bei Verwendung kleiner Probevolumina wird der Nachweisbereich des Testelements nur teilweise benetzt. In diesem Fall wird im Folgenden der benetzte Bereich auch als Probetropfen bezeichnet. Bei der Auswertung des Probetropfens werden nur die Ausschnitte, die mit der Körperflüssigkeit ausreichend benetzt sind, zur Bestimmung der Konzentration des Analyten berücksichtigt. Diese Unterscheidung von benetzten und unbenetzten Arealen wird wie bereits beschrieben mit Hilfe des ersten Schwellenwertes für die gemessene Lichtintensität der einzelnen Teilbereiche vorgenommen. Durch die teilweise Benetzung bilden sich Randbereiche auf dem Nachweisbereich aus, da sich die Probe und damit auch der Analyt am Rand des aufgegebenen Tropfens anders verteilt als im Kern des Tropfens. Der Austausch von Flüssigkeit und damit auch Analyt in diesen Bereichen ist unterschiedlich, da im Randbereich die Probe an unbenetzte Teilbereiche grenzt und somit ein Konzentrationsgradient von benetzten zu unbenetzten Teilbereichen auftritt, während die Teilbereiche im Kern des Tropfens an Teilbereiche grenzen, die im Mittel die gleiche Flüssigkeitsmengen und damit Analytkonzentration aufweisen. Die Verteilung der Probeflüssigkeit ist dabei abhängig von der Viskosität und Zusammensetzung der Probe sowie den Eigenschaften des Nachweisbereiches. Vor allem bei kleinen Probevolumen kann die gesonderte Auswertung des Randbereiches zu genaueren Ergebnissen führen. Übersteigt der Randbereich dabei einen Anteil von ca. 50 %, kann das Messergebnis je nach Analytgehalt mehr als z.B. 10 % verfälscht sein, wenn eine Mittelung über alle benetzten Teilbereiche stattfindet. Zur Vermeidung dieser Verfälschung werden die Signale der Teilbereiche des Randbereichs, die zwischen den unbenetzten bzw. nicht ausreichend benetzten und den Teilbereichen des Kernbereiches liegen, mit Hilfe eines Korrekturalgorithmus ausgewertet. Mit der unterschiedlichen Auswertung von Rand- und Kernbereichen können sehr kleine Probevolumen (<100 nl) exakt ausgewertet werden. Dies bedeutet, dass Testelemente mit kleinerem Nachweisbereich als bei herkömmlichen Testelementen eingesetzt werden können. Hierdurch kann die Fläche des Nachweisbereiches des Testelementes verringert werden wofür weniger Lichtmenge zur Ausleuchtung nötig ist. Dadurch kann der Energiebedarf des Systems gesenkt werden und das System kann weiter miniaturisiert werden.

Je nach Aufbau des Nachweisereiches kann nach Aufgabe der Flüssigkeit ein Verdunstungsprozess beginnen. Dieser Verdunstungsprozess trocknet den Probetropfen vom Rand her aus. Bei diesem Austrocknungsprozess kann sich der Analyt im Randbereich anreichern. Tritt dieser Austrocknungsprozess nicht auf, weil das Testelement mehrschichtig aufgebaut ist, und ein Verdunsten von Flüssigkeit im zeitlichen Rahmen der Vermessung (Sekunden) vernachlässigt werden kann, so kann sich im Kern des Probetropfens der Analyt anreichern. Beide Effekte können vor allem bei sehr kleinen Probemengen, bei denen der Randbereich einen größeren Anteil am Probetropfen hat als bei großen Probemengen, zu signifikanten Verschiebungen der Messsignale im Kernbereich des Probetropfens führen. Bei der Auswertung ausschließlich der Intensitäten aus dem Kernbereich würde bei Anreicherung des Analyten im Randbereich eine zu niedrige Konzentration bestimmt und bei Anreicherung des Analyten im Kernbereich eine zu hohe Konzentration bestimmt werden. Im Folgenden wird ein System beschrieben, bei dem die benetzten Teilbereiche eine Abdunkelung aufgrund der Reaktion des Analyten mit dem Reagenz und der damit verbundenen Farbstoffbildung erfahren. Weiterhin weist das im Folgenden beschriebene System weniger Analyt im Randbereich auf. Dies ist nur beispielhaft, es sind auch Systeme von der Erfindung umfasst, die eine Intensitätserhöhung bei der Reaktion des Analyten mit dem Reagenz erfahren sowie Systeme, die eine Anreicherung von Analyt im Randbereich erfahren.

Durch die Verwendung zweier Schwellenwerte kann eine differenzierte Auswertung des Probetropfens im Rand- bzw. Kernbereich erzielt werden. Durch Verwendung unterschiedlicher Algorithmen bzw. Verwendung von Korrekturfaktoren für diese Teilbereiche kann eine qualifizierte Angabe über die Analytkonzentration gegenüber herkömmlichen Mittelungsmethoden gemacht werden. Der Korrekturalgorithmus kann dabei eine sich auf eine Tabelle stützende (mehr)stufige Korrektur sein, wie beispielsweise ein Faktor, der für verschiedene Intensitätsbereiche unterschiedlich groß ist. Wenn die Signale ausserhalb des korrigierbaren Bereiches liegen oder die Messung durch die Qualitätskontrolle als nicht geeignet erscheint kann der Patient durch ein Warnsignal (z.B. optisch oder akustisch) darauf aufmerksam gemacht werden, dass das Messergebnis fehlerbehaftet sein kann. Weiterhin kann der Patient aufgefordert werden die Messung zu wiederholen.

Neben der differenzierten Auswertung von Rand- und Kernbereichen zur genaueren Bestimmung der Analytkonzentration, kann die Form und Ausprägung des Randbereiches zusätzlich zur Qualitätskontrolle herangezogen werden. Über- oder unterschreitet die Ausdehnung des Randbereichs beispielsweise einen vorgegebenen Wert, so kann diese Erkenntnis zur Qualitätskontrolle herangezogen werden. Die von der Norm abweichende Form bzw. Ausdehnung des Randbereiches ist von folgenden Randbedingungen beeinflusst:
· Unregelmäßigkeiten des Nachweisbereiches, die bei der Produktion entstehen können
· Verschmutzung des Nachweisbereiches vor oder bei Benutzung
· Probeneigenschaften, die von der Norm abweichen, wie Viskositätsveränderungen z.B. durch Veränderung des Hämatokritgehalts oder andere Blutbestandteile.

Die Erkennung von Unregelmäßigkeiten und Verschmutzung des Nachweisbereiches vor oder nach Aufgabe der Probe können zu einer Qualitätskontrolle herangezogen werden. Wenn solche Unregelmäßigkeiten oder Verschmutzungen festgestellt werden, kann der Patient aufgefordert werden ein neues Testelement zu verwenden. Die Unregelmäßigkeiten des Nachweisbereiches können für den Patienten häufig nicht ersichtlich sein, da sie entweder zu klein sind, um vom Auge erfasst zu werden, oder weil sie in einer Schicht des Nachweisbereiches liegen, die von der obersten Schicht abgedeckt ist. Es kann sich dabei sowohl um defekte Stellen in einer oder mehreren Schichten handeln, oder auch um eine inhomogene Verteilung von Reagenzien, wenn diese zum Nachweis des Analyten benötigt werden. Diese Unregelmäßigkeiten können dann dazu führen, dass der Tropfen sich nicht gleichmäßig auf dem Nachweisbereich ausdehnt, sondern an mindestens einer Stelle von der Norm abweichende Randbereiche des Tropfens ausbildet. So kann beispielsweise eine Unterbrechung des Randbereiches um den Tropfen herum auf eine solche Unregelmäßigkeit hinweisen. Auch die Verschmutzung des Nachweisbereiches kann für den Patienten nicht ersichtlich sein und kann die gleichen Folgen für die Ausbreitung des Probetropfens auf dem Nachweisbereich haben wie die produktionsbedingten Veränderungen.

Die Probeneigenschaften, die sich aufgrund der Zusammensetzung der Probe (meist Blut) ergeben, können von unterschiedlicher Ausprägung sein. Die Zusammensetzung der Probe hat großen Einfluss auf die Viskosität der Probe und damit auf die Ausbreitung des Probetropfens auf dem Nachweisbereich. Einer der Hauptfaktoren, der die Viskosität der Probe beeinflusst ist der Hämatokritgehalt des Blutes. Selbst innerhalb des Normbereiches (35-55 % des Blutvolumens) kann der Randbereich unterschiedliche ausgeprägt sein, was jedoch durch den Korrektur-Algorithmus ausgeglichen werden kann. Weichen ein oder mehrere Blutparameter stark von der Norm ab, so kann dies Auswirkung auf die Viskosität haben und damit auf die Ausbreitung der Probe auf dem Nachweisbereich. Zur Erkennung solcher Proben kann ein Ausdehnungs-Intervall für den Randbereich festgelegt werden, das nicht über bzw. unterschritten werden darf, um eine ausreichend genaue Auswertung der Messung zu gewährleisten.

Mit Hilfe der Anzahl der Teilbereiche, die zwischen dem ersten und dem zweiten Schwellenwert liegen und der bekannten Fläche jedes Teilbereiches kann die Fläche des Randbereiches bestimmt werden. Wenn die Fläche des Randbereiches im Verhältnis zur Gesamtfläche der benetzten Teilbereiche ein Ausdehnungs-Intervall, das abhängig von der Größe der Fläche der benetzten Teilbereiche ist, über- bzw. unterschreitet, so kann die Messung abgebrochen werden, da davon auszugehen ist, dass eine Störung vorliegt, die nicht mit einem Korrektur -Algorithmus auszugleichen ist. Dies kann durch Störungen in der Probe als auch im oder auf dem Nachweisbereich hervorgerufen sein. Zur Ermittlung, ob die Fläche des Randbereiches Eine Ursache für ein zu geringes Rand-/ Kernbereichsverhältnis kann eine Unterbrechung des Randbereiches um den Kernbereich sein. Hierzu wird für alle Teilbereiche des Kernbereiches ermittelt, ob sie an einen unbenetzten Teilbereich angrenzen. Die Anzahl der direkt an unbenetzte Teilbereiche angrenzenden Teilbereiche wird ins Verhältnis zu der Gesamtzahl der Teilbereiche des Kernbereiches gesetzt. Übersteigt dieses Verhältnis einen Anteils-Schwellenwert, so kann die Messung abgebrochen werden, da davon auszugehen ist, dass eine Störstelle im Nachweisbereich vorliegt. In einer bevorzugten Ausführungsform wird die Messung abgebrochen, wenn mehr als 10 % der Teilbereiche des Kernbereiches nicht von einem Randbereich umgeben sind sondern von unbenetzten Teilbereichen.

Wenn der Randbereich an mindestens einigen Stellen eine Maximalbreite überschreitet, dann kann die Messung ebenfalls abgebrochen werden. Hierzu wird ermittelt, ob von jedem Teilbereich, der den ersten und den zweiten Schwellenwert unter- bzw. überschreitet und an einen Teilbereich angrenzt, der nur einen Schwellenwert unter bzw. überschreitet, ein Maximalabstand zum weitest entfernten unbenetzten Teilbereich überschritten wird. Auf dem Weg zwischen dem benetzten und unbenetzten Teilbereich dürfen nur Teilbereiche aus dem Randbereich liegen. Die Messung kann abgebrochen werden, wenn der Maximalabstand einen äußeren Randbereichs-Schwellenwert übersteigt. Der äußere Randbereichs-Schwellenwert kann dabei in Abhängigkeit vom verwendeten Testelement festgelegt werden.

Weiterhin kann ein zu schmaler Randbereich auf nicht korrigierbare Veränderungen am Nachweisbereich oder der Probe führen. Dies kann festgestellt werden in dem von jedem Teilbereich, der den ersten und den zweiten Schwellenwert unter- bzw. überschreitet und an einen Teilbereich angrenzt, der nur einen Schwellenwert unter bzw. überschreitet, ein Minimalabstand zum nächstliegenden unbenetzten Teilbereich ermittelt wird, wobei auf dem Weg zwischen dem benetzten und unbenetzten Teilbereich nur Teilbereiche aus dem Randbereich liegen. Die Messung kann abgebrochen werden, wenn der Minimalabstand einen inneren Randbereichs-Schwellenwert unterschreitet und/oder der Maximalabstand einen äußeren Randbereichs-Schwellenwert übersteigt.

Durch Berechnung des Verlaufs bzw. der Verteilung der Intensitäten im Randbereich, kann eine weitere Qualitätskontrolle vorgenommen werden. Bei einer Normalverteilung der Bestandteile der Probe hat der Intensitätsverlauf des Randbereichs eine charakteristische Form. Eine Möglichkeit diesen geänderten Verlauf zu ermitteln ist die Bestimmung der Steigung der Messwerte vom inneren zum äußeren Bereich des Randbereiches. Der innere Bereich des Randbereiches grenzt an Teilbereich des Kernbereiches und der äußere Bereich des Randbereiches grenzt an nicht benetzte Teilbereiche. Die Steigung wird ermittelt durch Bestimmung der Intensitätsänderung von benachbarten Pixeln. Wenn die Steigung einen vorgegebenen Normalbereich über oder unterschreitet wird jeweils ein Korrekturalgorithmus benutzt, um die erniedrigte oder erhöhte Viskosität des Blutes zu berücksichtigen. In einer bevorzugten Ausführungsform sollte die Abweichung der Steigung vom Normalwert 20 % nicht unter- bzw. überschreiten. Je nach Spreit-Netz kann der Normalbereich zwischen 10 und 40 µm liegen. In einer bevorzugten Ausführungsform liegt er zwischen 20 und 30 µm. Weicht die Ausdehnung des Randbereiches zwischen 1 und 20 % vom Normalbereich ab, so kann der Korrekturalgorithmus verwendet werden, der das Ausmaß der Abweichung vom Normalbereich mit berücksichtigt. Der Korrekturalgorithmus kann z.B. eine Tabelle sein, die entweder fest in der Detektionseinheit oder der Auswerteeinheit eingebunden ist. Mit Hilfe der Tabelle kann über eine Code-Information die Korrektur gemacht bzw. angepasst werden. Wenn der Randbereich mehr als 20 % von dem unteren bzw. oberen Normbereich abweicht, kann die Messung verworfen werden, weil davon ausgegangen werden muss, dass Verunreinigungen oder Produktionsfehler bei der Herstellung des Testelementes vorliegen.

Liegt der Randbereich in einem vorgegebenen Normbereich so können mit Hilfe des Korrekturalgorithmus sehr kleine Probenvolumina vermessen werden, die ohne diesen Algorithmus mit zu großen Fehlern behaftet wären. Dies ist besonders bei sehr niedrigen Analytkonzentrationen wichtig, da z. B. bei der Bestimmung kleiner Glukosekonzentrationen eines Diabetikers die fehlerhafte Messung zu gravierenden Konsequenzen (wie Bewusstseinsverlust oder gar Tod) führen kann. Es kann mit der Wahl des Korrekturfaktors aus der in der Auswerteeinheit abgelegten Tabelle eine mehrstufige Hämatokritgehaltsabschätzung vorgenommen werden. Durch diese Korrekturalgorithmen, die die Randbereiche auswerten, ist es möglich, ein Volumen bis herunter zu 10 nl auf dem Nachweisbereich zu analysieren. Das entspricht etwa einem Blutvolumen von weniger als 50 nl, was eine deutliche Verringerung des Blutvolumens bei der Glukosebestimmung gegenüber Systemen aus dem Stand der Technik darstellt.

Die Detektion kann mit Hilfe von Pixeldetektoren ortsaufgelöst ausgelegt werden. Hierbei wird die von jedem Pixel detektierte Intensität mit dem Ort eines Teilbereiches auf dem Nachweisbereich korreliert. Die Intensität des von dem Teilbereich abgestrahlten Lichtes kann zusammen mit der Position des Teilbereiches abgespeichert werden. Die ortsaufgelöste Detektion des Nachweisbereiches wird als System erster Art bezeichnet. Zum anderen kann aber auch die Beleuchtung so gestaltet werden, dass immer nur ein kleiner Probenausschnitt bzw. Teilbereich auf dem Testelement beleuchtet wird, dessen Position und Größe bekannt ist. Die Intensität jedes Teilbereiches auf dem Nachweisbereich kann dann zusammen mit seiner Ortsinformation gespeichert und verarbeitet werden. Die Speicherung der Ortsinformation ist nur für eine Variante der Randbereichsauswertung notwendig. Die Systeme, die eine ortsaufgelöste Messung mit Hilfe mehrerer Lichtquellen gewährleistet werden im Folgenden als Systeme zweiter Art bezeichnet. Sowohl mit dem Systemen erster als auch mit dem System zweiter Art ist eine ortsaufgelöste Messung durchzuführen, die eine vergleichbare Auflösung des Nachweisbereiches erreichen kann.

Das System erster Art kann eine oder mehrere Lichtquellen benutzen, um das Testelement ausreichend zu beleuchten und wertet mit Hilfe einer ortsaufgelösten Detektionseinheit die vom Nachweisbereich abgestrahlten Lichtintensitäten aus. Zur homogenen Ausleuchtung des Nachweisbereiches kann ein streuendes Medium, z.B. ein Milchglas, zwischen Lichtquelle und Nachweisbereich angeordnet werden. Das streuende Medium bewirkt, dass das Licht der Lichtquelle diffus gestreut wird und auf diese Weise Intensitätsunterschiede des eingestrahlten Lichtes auf dem Nachweisbereich verringert werden. Als Detektoren können beispielsweise Photodiodenarrays (Silizium), Zeilenarrays, Kamerachips, CCD-Kameras oder CMOS-Chips zum Einsatz kommen.

In dem System zweiter Art wird für die sequentielle Beleuchtung des Nachweisbereiches mindestens eine Lichtquelle benötigt. Diese Beleuchtungsoptik kann aus einer Halbleiterlasereinheit bestehen, bei der ein Laserstrahl senkrecht zur Montageebene emittiert wird. Als Alternative hierzu können auch herkömmliche Lichtquellen mit entsprechender Filterung oder auch LED's (light emitting diodes) oder LED Arrays zur Beleuchtung eingesetzt werden. Die beiden Systeme der ortsaufgelösten Bestrahlung und der ortsaufgelösten Detektion können miteinander kombiniert werden.

Je nachdem, ob es sich bei der Messung um eine Absorption von Licht oder um eine Fluoreszenzmessung handelt, wird der erste Schwellenwert von benetzten Teilbereichen unter- oder überschritten. Beispielhaft wird von einer Absorptionsmessung gesprochen, bei dem die benetzten Teilbereiche den ersten Schwellenwert unterschreiten. Bei der Absorptionsmessung wird bei der Reaktion des Analyten mit dem Reagenz ein Farbstoff gebildet, der bei der eingestrahlten Wellenlänge Licht absorbiert. Dies führt zu einer Verdunkelung des Nachweisbereiches. Die benetzten Teilbereiche strahlen also weniger Licht ab als die unbenetzten. Bei einer Fluoreszenzmessung wird bei Anwesenheit des Analyten in der Probe z.B. ein Fluoreszenzfarbstoff gebildet oder gebunden, der Licht einer bestimmten, zu detektierenden Wellenlänge abstrahlt oder einen anderen bzw. sich gegenseitig quenscht. Hierbei können die benetzten Teilbereiche mit Analyt eine höhere Intensität bei der detektierten Wellenlänge aufweisen als die unbenetzten Teilbereiche, aber auch niedrigere.

Das Probevolumen der Körperflüssigkeit zur Bestimmung der Konzentration des Analyten kann kleiner als 1 µl betragen. Ein bevorzugter Bereich des Probevolumens liegt zwischen 10 und 500 nl, der noch mit ausreichender Genauigkeit vermessen werden kann. Hierbei beträgt die Messzeit zur Bestimmung der Konzentration vorzugsweise weniger als 5 Sekunden. Der Aufbau von Testelementen für kleine Probevolumina kann prinzipiell auf den bereits bekannten Aufbau von Testelementen basieren, die aus dem Stand der Technik bekannt sind, wie aus den Anmeldungen US 2005/0201897, US 6,881,378, US 6,696,024, US 6, 592,815, US 5,814,522, US 5,451,350, EP 1 035 920 oder EP 1 035 921 bekannt.

Weiterhin wird ein Instrument beansprucht, das zur Verwendung in dem System geeignet ist. Dieses Instrument kann zusätzlich ein streuendes Medium zwischen Lichtquelle und Nachweisbereich aufweisen, um den Nachweisbereich homogen auszuleuchten.

Des Weiteren wird die Verwendung eines Beleuchtungsarrays in dem System zur Bestimmung der Konzentration eines Analyten beschrieben. Hierbei werden Teilbereiche des Nachweisbereiches eines Testelementes mit mindestens einer Lichtquelle sequenziell oder gleichzeitig beleuchten. Weiterhin wird die Strahlung, die das Testelement abstrahlt mit einem Detektor detektiert und es findet eine Auswertung der Detektordaten und ein Vergleich der Signale der Teilbereiche mit mindestens zwei Schwellenwerten statt. Die Teilbereiche werden hierbei mit einem Beleuchtungsarray mit mindestens zwei Lichtquellen beleuchtet.

Außerdem kann in der Auswerteeinheit eine Berechnung des applizierten Volumens stattfinden. Diese Volumenberechnung wird beispielsweise durch eine Netzstruktur (wie ein Spreit-Netz) ermöglicht. Mit Hilfe dieser Netzstruktur, das eine Gitterstruktur mit bekannten Gitterabständen besitzt, kann die benetzte Fläche des Nachweisbereiches bestimmt werden. Aufgrund der Anzahl der auf der Gitterstruktur benetzten Teilbereiche des Nachweisbereiches kann daraus auf ein Probevolumen geschlossen werden. Die kleinsten zu bestimmenden Probemengen liegen z. B. im Bereich von 10 nl. Die Messzeit beträgt dabei vorzugsweise weniger als 5 Sekunden.

Das Testelement wird mit mindestens einer Lichtquelle ortsaufgelöst abgerastert. Bei diesem Vorgang werden bei einem System zweiter Art sequentiell verschiedene Ausschnitte des Testelements beleuchtet oder bei einem System erster Art verschiedene Ausschnitte des Testelementes detektiert. Die Position und Größe dieser Ausschnitte ist bei Fixierung des Testelementes während der Messung genau definierbar über die Koordinaten der mindestens einen Lichtquelle bzw. des mindestens einen Detektors sowie den bekannten Strahlungseigenschaften der mindestens einen Lichtquelle. Durch die Wahl der mindestens einen Lichtquelle und der Beleuchtungsoptik im System zweiter Art kann die sequentiell bestrahlte Fläche variiert werden. Bei einer bevorzugten Ausführungsform ist der ausgeleuchtete Ausschnitt auf dem Nachweisbereich minimiert, indem der Abstand der Lichtquelle zusammen mit der Wahl der Beleuchtungsoptik optimiert wird. Neben der sequentiellen Bestrahlung des Nachweisbereiches des Testelementes kann auch eine fixierte Bestrahlung vorgenommen werden, wobei das Testelement ortsaufgelöst verschoben wird.

Für die Beleuchtung in einem System erster Art, in dem die Ortsauflösung durch den Detektor erfolgt, wird mindestens eine Lichtquelle benötigt, die möglichst homogen den Nachweisbereich ausleuchtet. Dies kann beispielsweise durch die Verwendung einer Vielzahl von Lichtquellen geschehen. Eine Alternative ist die Verwendung einer Lichtquelle, deren Licht durch eine streuende Einheit (beispielsweise ein Milchglas) homogen auf den Nachweisbereich gestreut wird. Es können Lichtquellen benutzt werden, wie sie im Stand der Technik bekannt ist.

Für ein System zweiter Art, können zur sequentiellen Beleuchtung des Testelementes verschiedene Beleuchtungseinheiten dienen. Hierzu zählt beispielsweise eine einfache Laserdiode kombiniert mit einem Reflektor der durch Mikromechanik verstellbar ist. Mit Hilfe des Reflektors kann der Lichtstrahl das Testelement lückenlos auf verschiedene Teilbereiche des Nachweisbereiches fokussiert werden. Das lückenlose Beleuchten und/oder Detektieren des Nachweisbereiches wird dabei auch Abrastern oder Abscannen genannt. Alternativ kann ein Laser-Array eingesetzt werden, bevorzugt ein VCSEL-Array (Vertical Cavity Surface Emitting Laser). Jeder Laser im Array ist hierbei einzeln adressierbar. Die VCSEL bieten den Vorteil, dass das Licht wenig divergiert. Diese Laserstrukturen weisen eine Strahldivergenz von etwa 5-8° auf. Auf diese Weise ist nicht nur eine kleine Fläche zu bestrahlen, zusätzlich ist die Lichtmenge auf dieser Fläche sehr hoch. Wenn die Laser dabei sehr nah an den Nachweisbereich des Testelementes heran gebracht werden (z.B. wenige Centimeter), kann auf eine abbildende Einheit wie Linsen oder Blenden verzichtet werden. Eine weitere Möglichkeit ist ein Laserdioden-Array. Hierbei kann entweder das Licht in einen Bildleiter eingekoppelt werden, der das Anregungslicht zu dem Testelement führt oder das Licht wird mittels eines Mikrolinsenarrays, das zwischen dem LED Array und dem Testelement angeordnet ist, auf die verschiedenen Bereiche des Testelements fokussiert. Als weitere Beleuchtungseinheit könnte auch ein OLED-Schachbrett (Organic Light Emmitting Diodes) dienen. Hierbei sind direkt benachbart eine Beleuchtungs-LED und ein Detektor angeordnet. Durch Anordnung mehrerer solcher Beleuchtungs-/Detektoreinheiten kann eine große Fläche flächig oder sequentiell ausgeleuchtet und die Reflektion detektiert werden. Da sowohl die Beleuchtung als auch die Detektion in ähnlichem Winkel zum Testelement angeordnet sind, eignet sich diese Anordnung bevorzugt für Fluoreszenzmessung, da hierbei das Anregungslicht und das vom Nachweisbereich emittierte Licht mittels Filter gut von einander zu trennen sind.

Systeme zweiter Ordnung weisen den Vorteil auf, dass sie sehr unempfindlich gegenüber Umgebungslicht sind und außerdem den Nachweisbereich homogen ausleuchten können. Dies ist mit nur einer Lichtquelle nur mit zusätzlichen Bauelementen durchführbar. Weiterhin ist der Energieeintrag und damit die Lichtmenge auf dem Nachweisbereich höher als bei der Beleuchtung mit nur einer Lichtquelle, was zu einer sensitiveren Messung führen kann.

Die Beleuchtungseinheit sowohl erster als auch zweiter Art kann aus einer monochromen oder multispektralen, kohärenten oder inkohärenten Strahlungsquelle bestehen. Die Strahlung aus der Beleuchtungseinheit dient dazu in den Nachweisbereich einzudringen, um den Analyten direkt oder die Farbreaktion eines Reagenz mit dem Analyt zu messen. Vorzugsweise besteht die Beleuchtungseinheit aus einer oder mehreren LEDs deren Licht am Nachweisbereich entweder für eine speziell gewählte räumliche Intensitätsverteilung oder für eine homogene Ausleuchtung sorgt. Um eine Tiefeninformation zu erhalten, kann die Anregung fokussiert ausgelegt werden. Der Fokus wird dann in Richtung der Tiefendimension verschoben. Wahlweise kann die Anregung über ein multispektrales LED Array erfolgen. Auch die kohärente Anregung mit Laserdioden beispielsweise im blauen / ultravioletten Spektralbereich insbesondere in der Fluorimetrie ist denkbar. In einer bevorzugten Ausführungsform wird Licht der Wellenlänge 600 nm detektiert.

Zwischen der Beleuchtungseinheit und dem Nachweisbereich kann mindestens eine Abbildungseinheit eingebaut sein. Diese Abbildungseinheit kann aus abbildenden optischen Elementen wie Linsen, Spiegeln, Prismen, lichtleitenden, streuenden oder holographischen Elementen bestehen. Dadurch wird eine möglichst homogene Bestrahlung des Nachweisbereiches gewährleistet, wie sie bevorzugt für Systeme erster Art geeignet ist. Eine weitere Abbildungseinheit dient zur Projektion des bestrahlten Probenkörpers auf die Detektionseinheit. Diese Abbildungseinheit besteht ebenfalls aus abbildenden optischen Elementen wie Linsen, Spiegeln, Prismen, lichtleitenden, streuenden oder holographischen Elementen. Wahlweise kann in einer Beleuchtungseinheit zweiter Art ein mikrooptisches Linsenarray verwendet werden bei dem jedes Einzelelement abgegrenzte räumliche Bereiche des Testelements auf Einzelelemente der Detektionseinheit abbildet.

Die Detektionseinheit kann aus einem flächigen oder zeilenförmigen Element bestehen, das die orts- wie auch die zeitaufgelöste Messung der gestreuten Strahlung, die vom Nachweisbereich abgestrahlt wird, ermöglicht. Vorzugsweise handelt es sich bei diesem Element um ein zweidimensionales CMOS-Array, ein CCD Array oder ein zeilenförmiges Diodenarray, bei dem die ortsaufgelöste Abbildung des Nachweisbereiches mittels eines Scanvorganges durchgeführt wird. Bei Verwendung einer Beleuchtungseinheit zweiter Art kann auch eine einfache Photodiode ohne Ortsauflösung hinreichend sein. Die Detektionseinheit wandelt die detektierte Lichtintensität in elektrische Signale um, die von der Auswerteeinheit weiter verarbeitet werden.

Je nachdem, ob die Detektion des abgestrahlten Lichtes durch Reflektion oder durch Transmission des eingestrahlten Lichtes stattfindet, ist die Detektionseinheit auf der gleichen Seite oder auf der entgegen gesetzten Seite wie die Lichtquelle in Bezug auf das Testelementes angeordnet.

Um nicht den kompletten Nachweisbereich abzuscannen können zunächst von der Mitte des Nachweisbereiches in einem groben Raster nach außen vereinzelt Teilbereiche beleuchtet werden. Mit Hilfe des ersten Schwellenwertes wird festgestellt, ob es sich um einen benetzten oder unbenetzten Teilbereich handelt. Mit Hilfe der Signale von diesen Teilbereichen wird eine erste Abschätzung der Lage des Kernbereiches gemacht. Der Kernbereich wird in einem engeren Raster bis zu den Randbereichen ausgeleuchtet. Die Beleuchtung und Auswertung kann abgebrochen werden, wenn genügend homogen benetzte Teilbereiche vermessen wurden. Wenn keine ausreichende Anzahl von Teilbereichen des Kernbereiches vorhanden sind, dann können Teilbereiche des Randbereiches mit zur Auswertung herangezogen werden, die mit einem Korrekturalgorithmus ausgewertet werden. Alternativ können ausgewertete Bereich aus dem Kernbereich und dem Randbereich auch gemittelt werden, oder ausschliesslich der Kern- bzw. der Randbereich ausgewertet werden. Eine weitere Möglichkeit ist, bei Verwendung von Intensitäten aus beiden Bereichen, die Intensitäten aus einem der beiden Bereiche höher zu wichten als den anderen, z.B. den Kernbereich höher zu wichten als den Randbereich oder umgekehrt.

Die Auswerteeinheit verarbeitet die Daten aus der Detektionseinheit. Als Hauptinformation wird hierbei die Analytkonzentration, im speziellen die Glukosekonzentration im Probenvolumen berechnet. Hierzu sind alle nötigen Algorithmen, wie sie zur Bestimmung des Analyten im homogenen Bereich aber auch im Randbereich verwendet werden, in der Auswerteeinheit abgespeichert. Zusätzlich können weitere Informationen wie z. B. Position, Größe und Geometrie des Probetropfens gewonnen werden. Hierzu dient ein Mustererkennungsverfahren, das auf einer ortsabhängigen Änderung der detektierten Lichtintensität beruht.

Diese Form der Signalbearbeitung hat folgende Vorteile:
1. Sie ermöglicht die Auswertung kleiner Probenvolumina mit V < 1 µl, da der Probenort auf dem Testelement durch die Mustererkennung bestimmt werden kann.
2. Das Verfahren ermöglicht eine Unterdosierungserkennung aus der Geometrie des Probenflecks oder Erkennung des Füllstandes in einer Probenkammer.
3. Es kann eine Randerkennung und die Anwendung eines Korrekturalgorithmus für Randeffekte durchgeführt werden. Damit können auch besonders kleine Blutvolumina (z. B. <50nl) vermessen werden.
4. Durch die Randerkennung kann zusätzlich ermittelt werden, ob die Fließeigenschaften der Probe im Normbereich liegen. Wenn nicht können mindestens zwei weitere Korrekturalgorithmen verwendet werden, die eine erhöhte oder erniedrigte Viskosität der Probe bei der Auswertung berücksichtigen.
5. Das Verfahren erlaubt die Verwendung einfacher und kostengünstiger Testelemente.
6. Bei Verwendung eines Spreit-Netzes auf dem Testelement kann aus der Fleckgeometrie das Probenvolumen bestimmt werden. Die Kenntnis dieses Parameters kann zur genaueren Auswertung der Messdaten herangezogen werden.

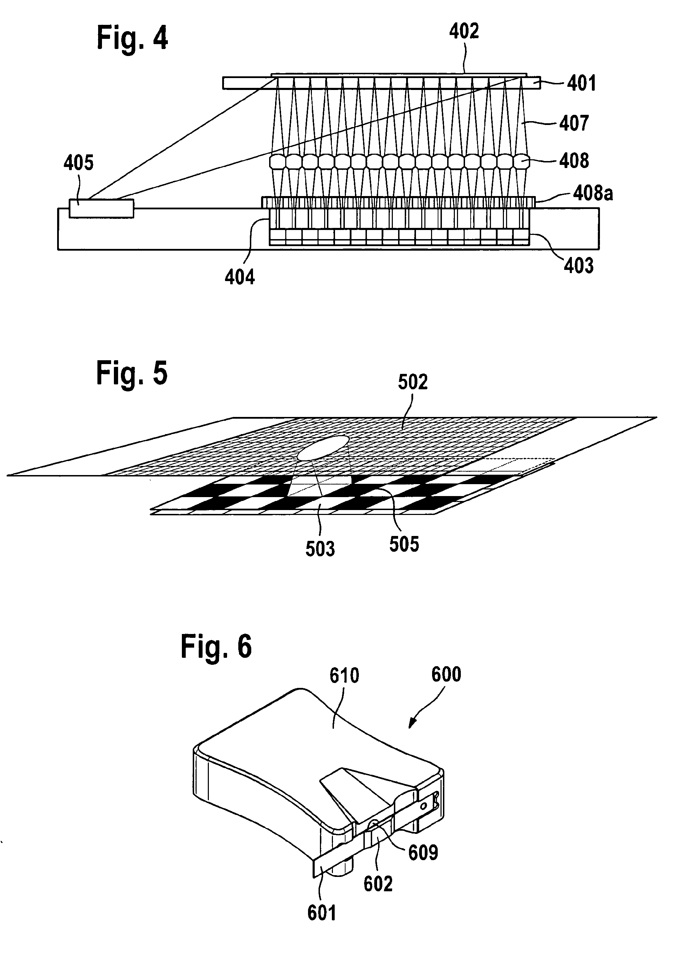

Die räumliche (oder flächige) Auflösung der in dem erfindungsgemäßen Detektionssystem erlaubt die Bestimmung mehrerer Parameter gleichzeitig. Hierzu wird der Nachweisbereich in räumlich abgegrenzte Bereiche unterteilt. Diese abgegrenzten Bereiche auf dem Nachweisbereich tragen Reagenzien, die parameterabhängig unterschiedliche Reaktionen erzeugen, bei denen Licht in unterschiedlichen spektralen Bereichen erzeugt wird. Die Trennung und spätere Analyse dieser räumlich abgegrenzten Bereiche wird durch ein Mustererkennungsverfahren möglich. Dies ist durch die Verwendung eines multispektralen Diodenarrays möglich. Eine mögliche Umsetzung dieser Variante bietet sich mit der Beispiellösung "OLED-Detektorschachbrett" aus Figur 5 an.

Auch bei generell flächig ausgelegten Testelementen, wie den marktüblichen photometrischen Glukoseteststreifen, lässt sich nicht nur aus den beiden Flächendimensionen, sondern auch aus der Volumendimension Information über den Zustand vor dem Probenauftrag bzw. während der Nachweisreaktion gewinnen.

Gegenstand der Erfindung ist ebenfalls ein System zur Detektion kleiner Blutvolumina. Dieses System besteht bevorzugter weise aus einem Gehäuse mit mindestens einer Öffnung. Das Gehäuse weist eine Möglichkeit auf, ein Testelement aufzunehmen oder zu halten. Dies kann durch eine Halterung auf der Außenseite des Gehäuses geschehen oder das Testelement wird in das Gehäuse geschoben. Im Gehäuse befinden sich eine Detektionseinheit sowie eine Beleuchtungseinheit. Zusätzlich kann sich eine Auswerteeinheit in dem Gehäuse befinden. Das Testelement wird dabei so platziert, dass der Nachweisbereich immer in einem bekannten Winkel zur Beleuchtungs- bzw. Detektionseinheit angeordnet ist. Bevorzugter weise erkennt das System mit Hilfe von Sensoren, ob das Testelement richtig in die Halterung eingelegt wurde. Weiterhin kann das System eine Fixierung für das Testelement aufweisen, damit gewährleistet ist, dass das Testelement richtig eingelegt wurde und während der Messung nicht bewegt wird. Nach Auswertung der optischen Signale kann das System dem Benutzer den berechneten Analytwert über eine Anzeige anzeigen. Das System kann zusätzlich ein Warnsystem enthalten, das dem Patienten anzeigt oder meldet, wenn eine Fehlmessung vorliegt.

### Kurze Beschreibung der Figuren

- Figur 1a:: zeigt eine schematische Darstellung eines Probetropfens auf einem Nachweisbereich
- Figur 1b:: zeigt eine schematische Darstellung eines Probetropfens mit unterbrochenem Randbereich auf einem Nachweisbereich
- Figur 1c:: Zeigt den schematischen Aufbau eines Beleuchtungs- und Detektionssystems mit mindestens einer Lichtquelle.
- Figur 1d:: Zeigt den schematischen Aufbau eines Beleuchtungs- und Detektionssystems für ein Testelement mit Mikromechanik für einen Reflektor.
- Figur 2a:: Zeigt den schematischen Aufbau eines Detektionssystems mit einem Laser Array zur sequentiellen Beleuchtung des Testelementes und eines Detektors.
- Figur 2b:: Zeigt den schematischen Aufbau eines Detektionssystems mit einem Laser Array zur sequentiellen Beleuchtung des Testelementes und eines Detektors in Aufsicht.
- Figur 3:: Zeigt die schematische Darstellung eines Detektionssystems mit einem LED Array als Beleuchtungseinheit eines Bildleiters zur Führung des Lichtes auf eine Trägerfolie und eines Lichtleiters zur Sammlung des reflektierten Lichtes zum Detektor.
- Figur 4:: Zeigt die schematische Darstellung eines Beleuchtungs- oder Detektionssystem mit einem LED Array als Beleuchtungseinheit eines Mikrolinsenarrays zur Fokussierung des Lichtes auf Bereiche des Testelementes und eines Detektors.
- Figur 5:: Zeigt eine schematische Darstellung eines OLED Schachbrettes das sowohl zur Beleuchtung als auch zur Detektion des reflektierten Lichtes dient.
- Figur 6:: Zeigt exemplarisch ein Messgerät mit eingelegtem Testelement.
- Figur 7:: Zeigt ein Messschema, wie es in der Auswerteeinheit durchlaufen wird.
- Figur 8a:: Zeigt einen Flüssigkeitstropfen, wie er sich auf einem groben Spreit-Netz ausdehnt.
- Figur 8b:: Zeigt einen Flüssigkeitstropfen, wie er sich auf einem feinmaschigen Spreit-Netz ausdehnt.

### Figurenbeschreibung:

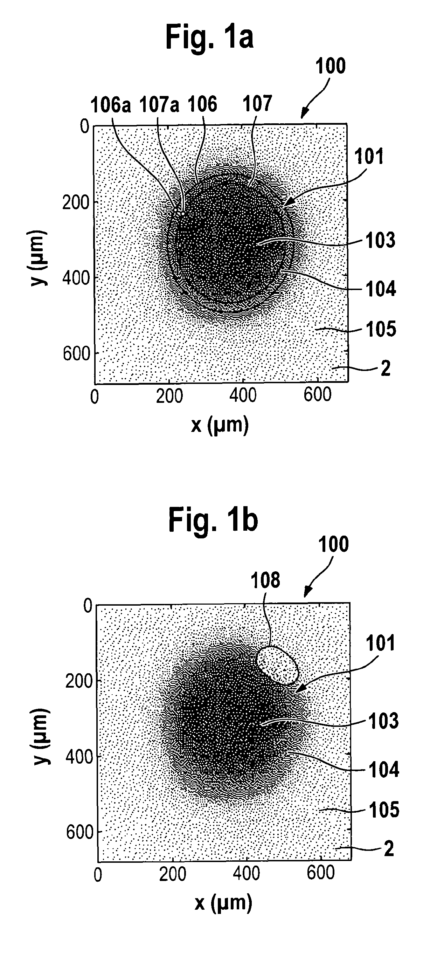

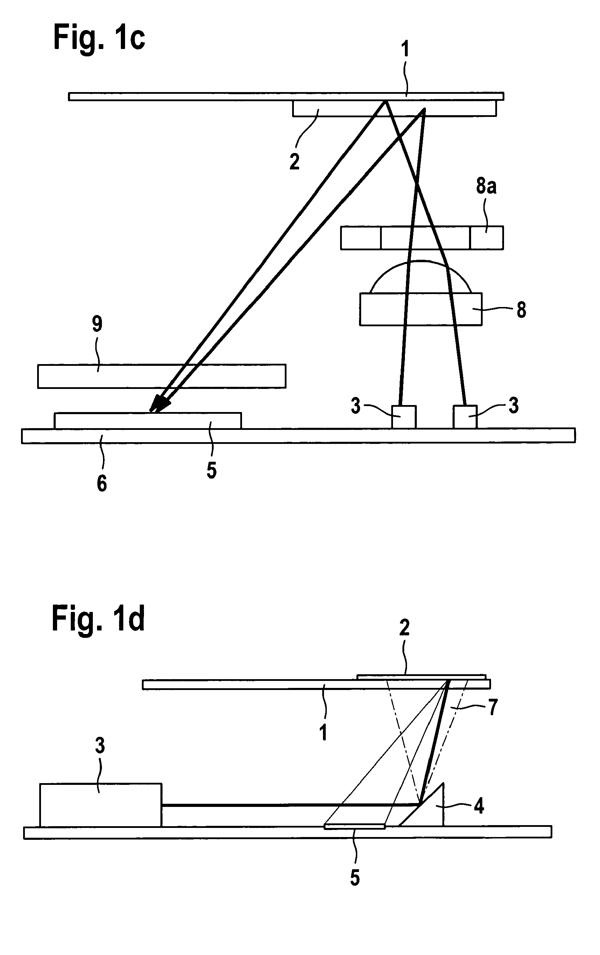

In Figur 1a ist das Bild (100) einer möglichen Ausbreitung eines Probetropfens (101) auf einem Nachweisbereich (2) dargestellt. Hier sind drei Bereiche von einander zu unterscheiden. Der Kern (103) des Tropfens ist der dunkelste Bereich im Bild. Daran schließt sich nach außen der Randbereich (104) an. Dieser ist durch eine leichte Aufhellung gegenüber dem Kern charakterisiert. Um den Randbereich (104) herum befinden sich nicht benetzte Teilbereiche (105), die fast weiß sind, also den hellsten Bereich auf dem Nachweisbereich (2) darstellen. Die Kreise (106) und (107) stellen schematisch die beiden Schwellenwerte zur Abgrenzung der 3 Bereiche dar. Dabei wird der Randbereiches (104) vom Kernbereich (103) durch den Kreis (107) abgegrenzt. Der Randbereich (104) wird weiterhin durch den Kreis (106) vom unbenetzten Bereich (105) abgegrenzt. Zur Ermittlung der Dicke des Randbereiches (104) werden die Abstände der Punkte die auf dem Kreis (106) (den ersten Schwellenwert darstellend) und den Punkten des Kreises (107) (den zweiten Schwellenwert darstellend) ermittelt. Dies ist exemplarisch an den beiden Punkten (106a) und (107a) dargestellt.

Figur 1b stellt schematisch das Bild (100) eines Probetropfens (101) dar, das eine ungleichförmige Ausbreitung auf einem Nachweisbereich (2) zeigt. Mit Hilfe des Kreises (108) wird angedeutet, dass an einer Stelle des Randbereiches (104) eine Unterbrechung vorliegt. Diese Unterbrechung kann, wie bereits beschrieben verschiedene Ursachen haben. Die häufigste Ursache für solch eine Unterbrechung des Randbereiches (104) ist eine Verunreinigung des Nachweisbereiches (2). Übersteigt die Größe dieser Unterbrechung einen bestimmten Grenzwert so kann die Messung abgebrochen werden, da zu befürchten ist, dass die Ergebnisse dieser Messung keine genaue Bestimmung des Analyten zulässt.

Wie bereits erwähnt, beinhaltet das System Instrumente zur Detektion von Konzentrationen mindestens eines Analyten in einer Körperflüssigkeit auf einem Testelement. Hierbei gewährleistet das System die Detektion von sehr kleinen Probenvolumina (z. B. 10 nl - 1 µl). Figur 1c zeigt einen schematischen Aufbau eines solchen Systems. Das Testelement (1) wird mittels mindestens einer Lichtquelle (3) von der dem Nachweisbereich (2) gegenüberliegenden Seite angestrahlt. Das reflektierte Licht wird mit Hilfe einer Detektionseinheit (5) aufgefangen. Dabei sind die Lichtquelle (3) und das Testelement (1) vorzugsweise in einem Winkel von 90° angeordnet. Auf diese Weise ist eine optimale Ausleuchtung des Testelementes möglich. Der Winkel kann aber je nach Eigenschaften oder Geometrie der Lichtquelle von 90° verschieden sein. Die Anordnung der Detektionseinheit (5) sollte zwischen 10° und 80°, zwischen Testelement (1) und Detektionseinheit (5) liegen, um das abgestrahlte Licht aufzufangen. Vorzugsweise wird in einem Winkel von 45° zum Testelement (1) detektiert. Auf diese Weise sind die Einflüsse des eingestrahlten Lichtes minimiert. Die Abbildungseinheiten wie Linse (8), Blende (8a) und Filter (9) sind optional. Zur Verbesserung der Lichtausbeute kann sowohl zwischen der Beleuchtungseinheit und dem Testelement als auch zwischen dem Testelement und der Detektionseinheit mindestens eine zusätzliche Abbildungseinheit (8), (8a) bzw. (9) eingesetzt werden. Die Abbildungseinheiten (8) und (8a) dienen zur Fokussierung der Strahlung aus der Lichtquelle (3) auf den Probenort, während die Abbildungseinheit (9) zur Filterung und/oder Lichtsammelung des vom Testelement (1) abgestrahlten Lichtes auf die Detektionseinheit (5) dient. Die verschiedenen Abbildungseinheiten bestehen aus der Kombination von abbildenden optischen Elementen wie Linsen, Blenden, Filter (Graufilter, Polarisationsfilter etc.), Spiegeln, Prismen, lichtleitenden oder holographischen Elementen. Die Abbildungseinheiten (8), (8a) und (9) sind optional und können in allen möglichen Kombinationen der aufgeführten optischen Elemente eingesetzt werden. In Figur 1 d ist ein Testelement (1) mit dem entsprechenden Nachweisbereich (2) dargestellt, der von der dem Nachweisbereich gegenüber liegenden Seite mittels einer Laserdiode (3) beleuchtet wird. Das Licht aus der Laserdiode (3) wird über einen Reflektor (4) der in seiner Position mittels einer Mikromechanik verstellbar ist, auf das Testelement (1) geleitet. Ein Teil des Lichtes wird von dem Testelement reflektiert und von einem Detektor (5) aufgefangen. Die Laserdiode (3) und der Reflektor (4) können dabei auf einem Trägerelement (6) montiert sein. Das Licht, das auf den Reflektor (4) trifft wird in einem Winkel zwischen 10° und 170° wieder abgestrahlt, vorzugsweise in einem Winkel von 70° bis 110°. Mit Hilfe der Mikromechanik kann der Reflektor (4) so angesteuert werden, dass in kleinen Rasterabständen der komplette Nachweisbereich (2) sequentiell abgerastert werden kann. Der auf diese Art und Weise bestrahlte und detektierte Bereich wird als "Scanbereich" (7) des Systems bezeichnet. So kann auf einem Testelement (1) mit einem Nachweisbereich (2) in der Größe von wenigen Quadratmillimetern eine Rasterung von 1 x 1 bis hin zu 640 x 480 Pixel oder mehr erreicht werden.

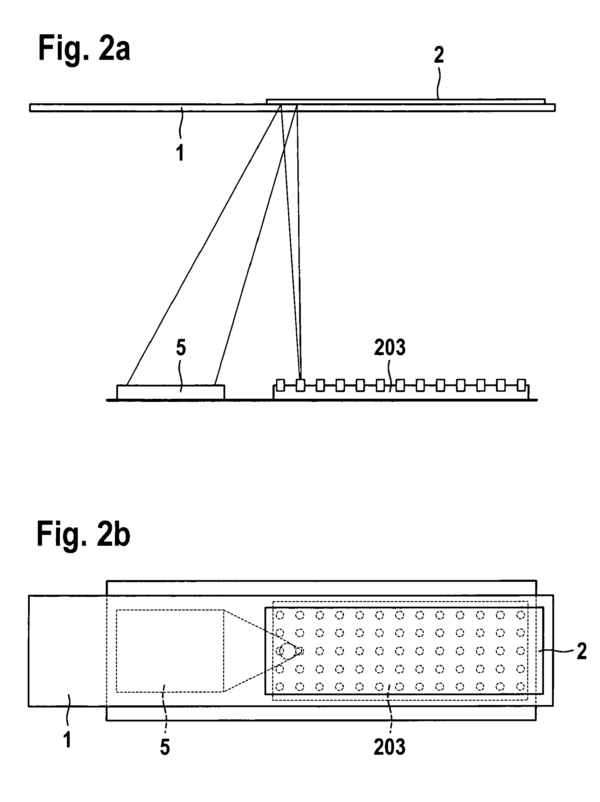

Wie in Figur 2a bzw. 2b dargestellt, kann diese Rasterung beispielsweise durch einen Laser Array (203) (z. B. ein Array mit mehreren VCSELasern) erreicht werden. Hierbei können Arrays in der Form von 2 x 2, 4 x 4, 8 x 8 oder 16 x 16 Lasern oder einem Vielfachen davon verwendet werden. Auch hierbei wird Nachweisbereiches (2) durch das Testelement (1) hindurch angestrahlt. Hierdurch kann vermieden werden, dass Bestandteile der Probe, die in verschiedenen Schichten des Testelementes zurückgehalten werden, die Messung stören. Dabei werden die einzelnen Laser (203) sequenziell angesteuert und so wird eine ortsaufgelöste Messung des Nachweisbereiches (2) durchgeführt. Der Detektor (5) braucht bei dieser Anordnung nicht ortsauflösend detektieren zu können.

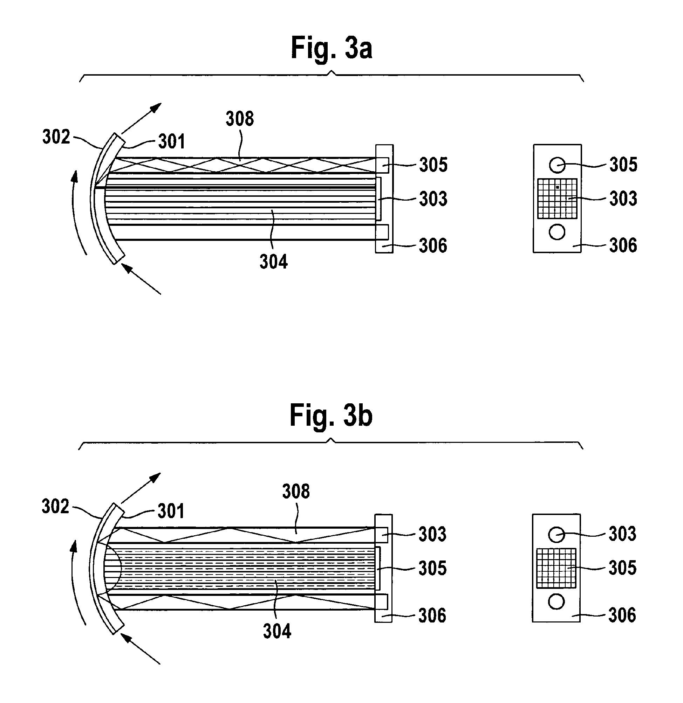

In einer weiteren Ausführungsform, die in Figur 3a dargestellt ist, wird ein LED Array (303) verwendet, das das Licht über einen Bildleiter (304) fokussiert auf das Testelement, in diesem Fall eine flexible Trägerfolie (301) mit Nachweisbereich (302), leitet. Die Trägerfolie kann dabei gebogen werden, wodurch ein homogenes Ausleuchten des Nachweisbereiches (302) nötig ist. Der Bildleiter (304) kann dabei ein Array bzw. Bündel von Glas- oder Polymerfasern sein. Mit Hilfe eines Lichtleiters (308) wird das reflektierte Licht vom Testelement (301) zum Detektor (305) geleitet. Dabei ist der LED Array (303) ebenfalls in Formaten 2 x 2, 4 x 4, 8 x 8 oder 16 x 16 oder mehr LEDs angeordnet. Die Anregungseinheit (303) und die Detektionseinheit (305) können dabei auf einem Trägerelement (306) montiert sein. Eine Variante dieser Ausführungsform ist in Figur 3b abgebildet. Hier ist die Funktion des Bildleiters (304) und des Lichtleiters (308) vertauscht. Das hat zur Folge, dass auch die Anordnung der Lichtquelle (303) und der Detektionseinheit (305) vertauscht sind.

Eine weitere Ausführungsform ist in Figur 4 dargestellt, auch hierbei wird ein LED Array (403) verwendet, dessen Licht mittels eines Mikroaperturarrays (404) in eine Richtung gebündelt wird. Mit Hilfe eines Mikrolinsenarrays (408) und optional einer Blendenanordnung (408a) wird das Licht jeder einzelnen LED aus dem LED Array (403) auf den Nachweisbereich (402) des Testelementes (401) fokussiert. Dabei hat das Mikrolinsenarray (408) die gleichen Abmessungen wie das LED Array (403), so dass jede LED mit einer Mikrolinse versehen ist. Jede LED auf dem Array ist einzeln adressierbar und besitzt einen eigenen Strahlengang (407). Diese Adressierungsmöglichkeit ermöglicht ein abrastern der Testelementoberfläche, da die Position jeder einzelnen LED bekannt ist. Das Licht, das vom Testelement reflektiert wird, wird mittels eines Detektors (405), aufgefangen.

Eine sehr Platz sparende Lösung ist in Figur 5 dargestellt. Zur sequentiellen Beleuchtung des Testelements dient ein OLED Detektor (505). Hierbei ist, wie auf einem Schachbrett jeweils eine Leuchtelektrode (503) neben einem kleinen Detektor (505) angeordnet. Auf diese Weise kann die Beleuchtungseinheit (503) zusammen mit der Detektionseinheit (505) sehr nahe an den Nachweisbereich (502) des Testelementes angeordnet werden. Folglich entsteht sehr wenig Streulicht aus der LED und es kann eine sehr hohe Ortsauflösung gewährleistet werden. In einer bevorzugten Ausführungsform beträgt die Pixelgröße der OLED-Felder zwischen 50 und 100 nm.

In Figur 6 ist exemplarisch ein Messgerät (600) gezeigt mit einem Gehäuse (610), das auf einer Seite eine Halterung für das Testelement (601) aufweist. Der Nachweisbereich (602) auf dem Testelement (601) befindet sich bei vollständig eingeschobenem Testelement (601), direkt vor einer Öffnung (609), die dazu dient das Anregungslicht von der Lichtquelle, die sich innerhalb des Gehäuses (610) befindet, direkt auf das Testelement (601) zu leiten. Wie in Figur 6 zu erkennen ist, ist der Nachweißbereich (602) für den Patienten sehr gut zugänglich. Dadurch ist das Aufbringen der Probe für den Patienten sehr einfach und die Gefahr einer Verschmutzung des Gehäuses (610) sehr gering.

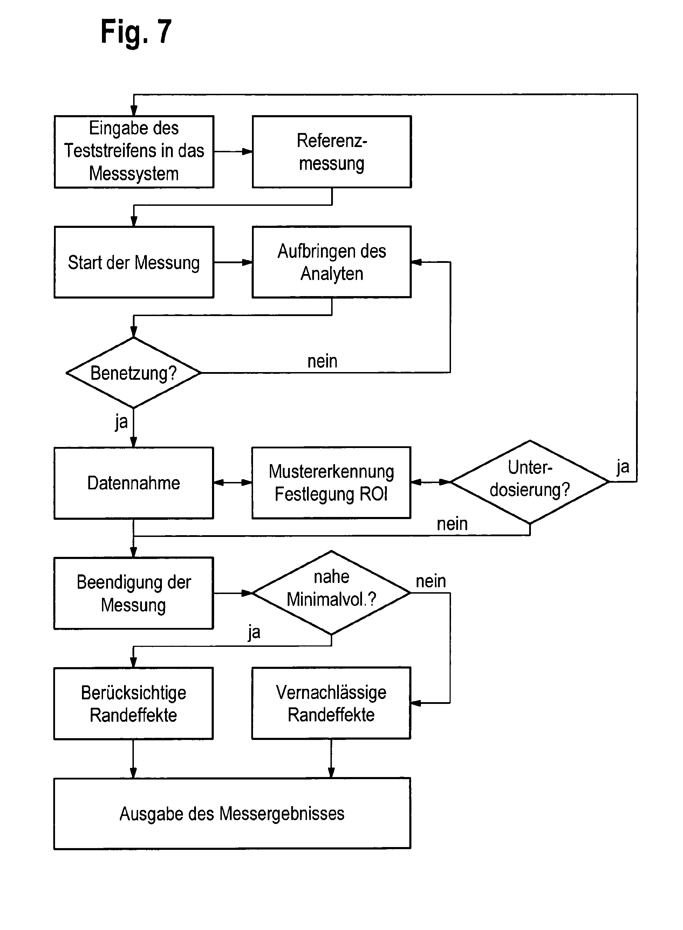

In Figur 7 ist schematisch dargestellt, wie sich ein Messvorgang vollzieht. Als erster Schritt ist die Eingabe des Testelementes in das Messsystem vorgesehen. Nach korrektem einlegen in das System findet eine Referenzmessung statt, woraufhin die eigentliche Messung gestartet wird, in dem der Analyt auf den Nachweißbereich aufgebracht wird. Daraufhin wird automatisch die Benetzung des Testelementes geprüft. Wenn das System eine zu niedrige Benetzung berechnet hat, fordert es den Patienten auf mehr Probe zu applizieren, während bei ausreichender Benetzung das System zur Mustererkennung und Festlegung der auszuwertenden Region ("Region of Interest" ROI) fortschreitet. Trotz ausreichender Benetzung, kann das System an diesem Punkt erneut eine Korrektur vornehmen, wenn eine Unterdosierung festgestellt wird. Eine Unterdosierung hat dann zur Folge, dass ein weiterer Teststreifen benutzt werden muss. Bei ausreichender Dosierung wird die Dosierungsmessung beendet und es wird durch das System festgestellt, ob Randbereiche zur Berechnung der Analytkonzentration herangezogen werden müssen oder nicht. Das System schreitet dann automatisch mit der Berechnung fort und gibt anschließend das Messergebnis aus.

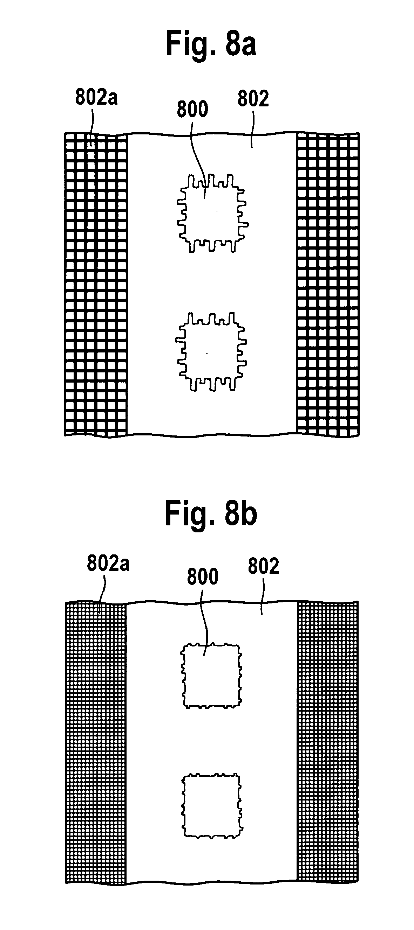

In den Figuren 8 a und b sind zwei verschiedene Nachweisbereiche (802) dargestellt, deren unterschiedliches Spreit-Verhalten dargestellt ist. In Figur 8a ist ein Nachweisbereich (802) mit sehr grobem Spreit-Netz (802a)dargestellt. Das hat zur Folge, dass aufgebrachte Flüssigkeitstropfen (800) sich sehr unregelmäßig auf dem Nachweisbereich (802) ausbreiten. In Figur 8b ist ein deutlich feinmaschigeres Netz (802a) in den Nachweisbereich (802) eingearbeitet. Hier ist zu erkennen, dass die Flüssigkeit sich wesentlich gleichmäßiger auf dem Nachweisbereich (802) ausbreitet.

## Patentansprüche

1. System beinhaltend
- eine Beleuchtungseinheit mit mindestens einer Lichtquelle zur Beleuchtung einer Vielzahl von Teilbereichen eines Nachweisbereiches eines Testelementes
- eine Detektionseinheit zur Detektion des von den Teilbereichen abgestrahlten Lichtes sowie
- eine Auswerteeinheit, die auf Basis des von den Teilbereichen detektierten Lichtes einen Analyt einer auf den Nachweisbereich eines Testelementes aufgegebenen Probe bestimmen kann
**dadurch gekennzeichnet, dass** die Auswerteeinheit das detektierte Licht zumindest eines Teils der Teilbereiche mit einem ersten und einem zweiten Schwellenwert vergleicht, wobei auf Basis des zweiten Schwellenwertes zumindest ein Teil der Teilbereiche einem Randbereich zugeordnet wird.

2. System nach Anspruch 1, **dadurch gekennzeichnet, dass** der Randbereich zur Qualitätskontrolle herangezogen wird.

3. System nach Anspruch 2, **dadurch gekennzeichnet, dass** die Qualitätskontrolle Hinweise auf die Viskosität der Probe gibt.

4. System nach Anspruch 1, 2 oder 3 **dadurch gekennzeichnet, dass** die Qualitätskontrolle Hinweise auf den Hämatokritgehalt der Probe gibt.

5. System nach einem der Ansprüche 1 bis 4, **dadurch gekennzeichnet, dass** das Testelement ein Reagenz enthält, das weitestgehend homogen in oder auf dem Nachweisbereich verteilt ist.

6. System nach einem der Ansprüche 1 bis 5, **dadurch gekennzeichnet, dass** Lichtintensitäten der Teilbereiche ortsaufgelöst vermessen werden, sodass die Lichtintensitäten im Zusammenhang mit Ortskoordinaten der Teilbereiche, von denen diese Lichtintensitäten abgestrahlt wurden, gespeichert werden.

7. System nach einem der Ansprüche 1 bis 6, **dadurch gekennzeichnet, dass** mit Hilfe der Anzahl der Teilbereiche, die zwischen dem ersten und dem zweiten Schwellenwert liegen und der bekannten Fläche jedes Teilbereiches die Fläche des Randbereiches bestimmt wird.

8. System nach Anspruch 7, **dadurch gekennzeichnet, dass** die Messung abgebrochen wird, wenn die Fläche des Randbereiches im Verhältnis zur Gesamtfläche der benetzten Teilbereiche ein Ausdehnungs-Intervall, das abhängig von der Größe der Fläche der benetzten Teilbereiche ist, über- bzw. unterschreitet.

9. System nach einem der Ansprüche 1 bis 8, **dadurch gekennzeichnet, dass** die Messung abgebrochen wird, wenn die Anzahl von Teilbereichen, die den ersten und den zweiten Schwellenwert unter bzw. überschreiten und die direkt an unbenetzte Teilbereiche angrenzen, einen Anteils-Schwellenwert überschreitet.

10. System nach einem der Ansprüche 1 bis 9, **dadurch gekennzeichnet, dass** von jedem Teilbereich, der den ersten und zweiten Schwellenwert unter bzw. überschreitet und an einen Teilbereich angrenzt, der nur den ersten Schwellenwert unter- bzw. überschreitet, ein Minimalabstand zum nächstliegenden unbenetzten Teilbereich ermittelt wird.

11. System nach Anspruch 10, **dadurch gekennzeichnet, dass** die Messung abgebrochen wird, wenn eine bestimmte Anzahl der ermittelten Minimalabstände einen inneren Randbereichs-Schwellenwert unterschreitet.

12. System nach Anspruch 10 oder 11, **dadurch gekennzeichnet, dass** von jedem Teilbereich, der den ersten und den zweiten Schwellenwert unter- bzw. überschreitet und an einen Teilbereich angrenzt, der nur einen Schwellenwert unter bzw. überschreitet, ein Maximalabstand zum weitest entfernten unbenetzten Teilbereich ermittelt wird, wobei auf dem Weg zwischen dem benetzten und unbenetzten Teilbereich nur Teilbereiche aus dem Randbereich liegen, wobei die Messung abgebrochen wird, wenn der Minimalabstand einen inneren Randbereichs-Schwellenwert und/oder der Maximalabstand einen äußeren Randbereichs-Schwellenwert übersteigt.

13. System gemäß einem der Ansprüche 1 bis 12, **dadurch gekennzeichnet, dass** Teilbereiche, die den ersten und den zweiten Schwellenwert unterschreiten mit einem ersten Algorithmus ausgewertet werden, während Teilbereiche, die nur einen Schwellenwert unter- bzw. überschreiten mit einem Korrekturalgorithmus ausgewertet werden.

14. System gemäß einem der Ansprüche 1 bis 13, **dadurch gekennzeichnet, dass** eine Kurve der Intensitäten der Teilbereiche die auf dem kürzesten Weg zwischen unbenetzten Teilbereichen liegen, die dem Randbereich benachbart sind und den Teilbereichen, die beide Schwellenwerte unter- bzw. überschreiten und dem Randbereich benachbart sind, ermittelt wird.

15. System nach Anspruch 14, **dadurch gekennzeichnet, dass** der Verlauf der Kurve zur Qualitätskontrolle herangezogen werden kann.

16. System gemäß einem der Ansprüche 1 bis 15 **dadurch gekennzeichnet, dass** die Beleuchtungseinheit steuerbar ist, sodass die mindestens eine Lichtquelle der Beleuchtungseinheit einen genau definierten Ausschnitt auf dem Nachweisbereich ausleuchtet.

17. System gemäß einem der Ansprüche 1 bis 16 **dadurch gekennzeichnet, dass** die Beleuchtungseinheit sequenziell verschiedene Ausschnitte auf dem Nachweisbereich beleuchtet.

18. System gemäß einem der Ansprüche 1 bis 17 **dadurch gekennzeichnet, dass** die Beleuchtungseinheit eine Halbleiterlaser-Einheit beinhaltet, bei der ein Laserstrahl senkrecht zur Montageebene emittiert wird.

19. System gemäß einem der Ansprüche 1 bis 18 **dadurch gekennzeichnet, dass** das Probenvolumen der Körperflüssigkeit zur Bestimmung der Konzentration eines Analyten kleiner als 1µl beträgt.

20. Ein Instrument geeignet zur Verwendung in einem System gemäß einem der Ansprüche 1 bis 19 beinhaltend:
- eine Beleuchtungseinheit mit mindestens einer Lichtquelle zur Beleuchtung einer Vielzahl von Teilbereichen eines Nachweisbereiches eines Testelementes
- eine Detektionseinheit zur Detektion des von den Teilbereichen abgestrahlten Lichtes sowie
- eine Auswerteeinheit, die auf Basis des von den Teilbereichen detektierten Lichtes einen Analyt einer auf den Nachweisbereich eines Testelementes aufgegebenen Probe bestimmen kann,
**dadurch gekennzeichnet, dass** ein streuendes Medium das Licht der Lichtquelle homogen auf den Nachweisbereich des Testelementes verteilt.

21. Verwendung eines Beleuchtungsarrays in einem System nach Anspruch 1 zur Bestimmung der Konzentration eines Analyten, mit den Schritten:
a. sequenzielles oder gleichzeitiges Beleuchten von Teilbereichen eines Testelements mit mindestens einer Lichtquelle,
b. Detektion der Strahlung, die das Testelement abstrahlt,
c. Auswertung der Detektordaten und Vergleich der Signale der Teilbereiche mit mindestens zwei Schwellenwerten
**dadurch gekennzeichnet, dass** das Beleuchtungsarray mindestens zehn Lichtquellen besitzt.
